# EUROPEAN PATENT SPECIFICATION

(11) **EP 2 434 790 B1**
(45) Date of publication and mention of the grant of the patent: **06.01.2016**
(21) Application number: 10793526.4
(22) Date of filing: 29.03.2010
(51) Int. Cl.: H04W 8/24, H04W 72/12

(54) **A METHOD AND SYSTEM FOR SENDING BUFFER STATUS REPORT**
VERFAHREN UND SYSTEM ZUM SENDEN VON PUFFERSTATUSBERICHTEN
PROCÉDÉ ET SYSTÈME POUR L'ENVOI DE RAPPORT D'ÉTAT DE TAMPON

(30) Priority: 01.07.2009 CN 200910146769
(43) Date of publication of application: 28.03.2012
(73) Proprietor: ZTE Corporation, Shenzhen, Guangdong 518057 (CN)
(72) Inventor: ZHANG, Ruixia, Shenzhen Guangdong 518057 (CN)
(74) Representative: Schröer, Gernot H.
(86) International application number: PCT/CN2010/071387
(87) International publication number: WO 2011/000231

(56) References cited:
- WO-A1-2008/151407
- CN-A- 1 604 685
- CN-A- 101 132 220
- KR-A- 20050 116 076
- RESEARCH IN MOTION LIMITED: "Various issues regarding SR channel handling (VoIP, SRS, etc)", 3GPP DRAFT; R2-081870, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080325, 25 March 2008 (2008-03-25), XP050139560, [retrieved on 2008-03-25]
- ZTE: "Considerations on scheduling in carrier aggregation", 3GPP DRAFT; R2-093886, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050352087, [retrieved on 2009-06-23]
- HTC CORPORATION: "BSR Triggering with Semi-Persistent Scheduling", 3GPP DRAFT; R2-086092-DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050321156, [retrieved on 2008-11-04]
- HTC CORPORATION: "BSR Triggering with Semi-Persistent Scheduling", 3GPP DRAFT; R2-085201_BSR_TRIGGERING_WITH_SPS_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech; 20080929 - 20081003, 22 September 2008 (2008-09-22) , XP050604051, [retrieved on 2008-09-22]
- NTT DOCOMO ET AL: "UL semi-persistent resource deactivation", 3GPP DRAFT; R2-082483, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kansas City, USA; 20080429, 29 April 2008 (2008-04-29), XP050140167, [retrieved on 2008-04-29]

## Description

### Technical Field

The present invention relates to a method and system for sending a buffer status report, and more particularly, to a method and system for sending a buffer status report in the long term evolution system (LTE) in the field of wireless communication.

### Background of the Related Art

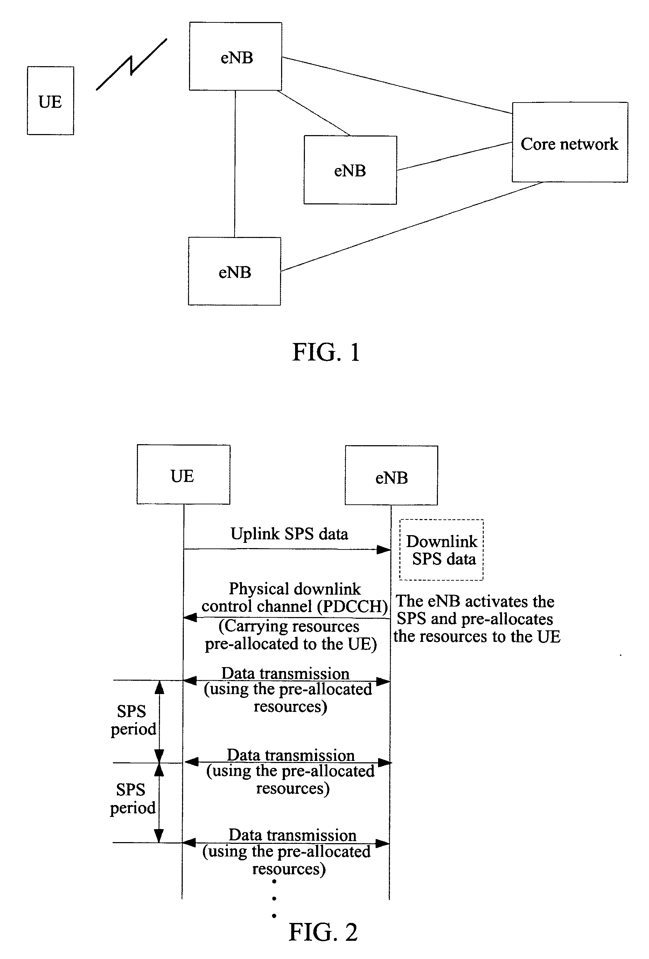

Referring to FIG. 1, the LTE system mainly consists of User Equipments (UE), evolved nodeBs (eNB) and a core network. The eNBs are responsible for transactions, such as radio resource management, in the access layer. The eNBs are in charge of scheduling uplink and downlink radio resources by sharing channels. The core network is responsible for transactions, such as billing and location management, in the non-access layers. Each UE is generally connected to only one eNB in the network in the uplink direction.

In the current LTE system, for the uplink and downlink shared channels, an eNB scheduling mode is used to control uplink and downlink transmission of different UEs to improve utilization of the channels. The eNB has two scheduling modes, semi-persistent schedule (SPS) and dynamic scheduling.

The semi-persistent schedule is a scheduling method designed for specific services and required to activate/release resources, it uses the pre-allocated resources at fixed time while performing dynamic schedule (retransmission) at other time.

The principle of the semi-persistent schedule is shown in FIG. 2. The semi-persistent schedule uses SPS data to trigger SPS activation and activates the UE with a dedicated physical downlink control channel (PDCCH) format. The uplink SPS and the downlink SPS are activated independently. In a semi-persistent schedule period, the UE uses persistent resources pre-allocated by the eNB to the UE to transmit data; when there are other concurrent services, the concurrent services are prohibited from transmitting in the same transmission time interval (TTI). In the semi-persistent schedule period, the UE is required to detect the PDCCH, if no control information of this UE is detected, persistent SPS parameters are used, and at this point the control information of the UE is not transmitted in order to save resources; if dynamic resource allocation of the UE is detected, the control information is demodulated and dynamic data is decoded.

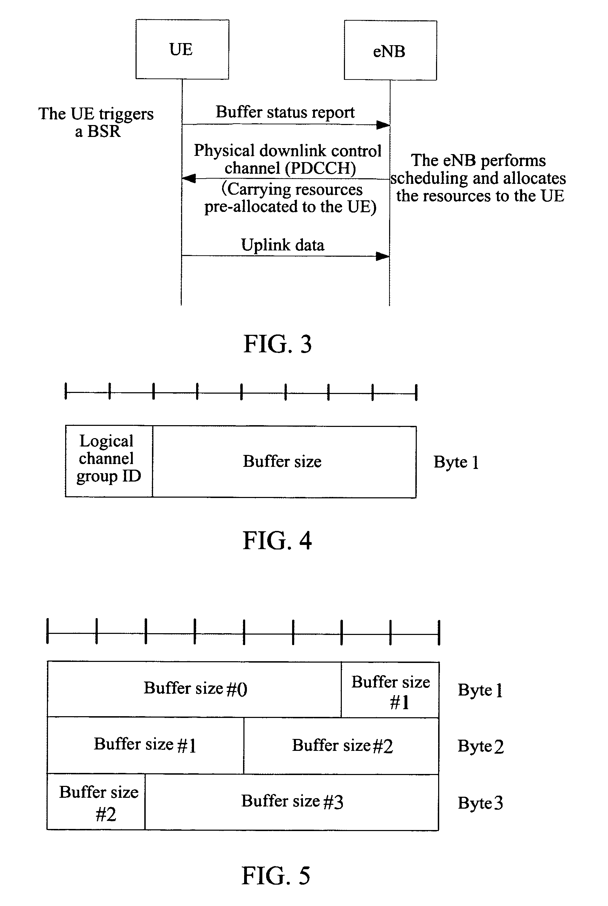

The dynamic schedule means that the eNB dynamically allocates resources to the UE in each TTI and notifies the UE via the PDCCH; the UE always detects the PDCCH to find out possible dynamic resource allocation. In the uplink direction, the principle of dynamic schedule is shown in FIG. 3, where the UE is a data sender, and a scheduler is located in the eNB, its steps are as follows:
Step 301, the UE satisfies a condition of triggering a buffer status report (BSR) and sends the BSR to the eNB, and the BSR is used by the UE to notify the eNB of the total amount of data in its uplink buffer.
Step 302, the eNB performs scheduling based on information, such as the BSR of the UE and channel quality, allocates resources to each UE, and notifies the UE via the PDCCH.
Step 303, the UE sends uplink data on the allocated resources.

In step 301, the condition of triggering the BSR is as follows:
(1) The UE has uplink data to be sent and the priority of a logical channel of the data is higher than that of data in a transmitting buffer of the UE. Such BSR is called as regular BSR.
(2) The UE is allocated with uplink resources and the amount of redundant padding is greater than or equal to the length of BSR control element plus its sub-header. Such BSR is called as padding BSR.
(3) A periodic BSR timer expires. Such BSR is called as periodic BSR.
(4) A BSR retransmission timer expires and there is data to be sent in its buffer. Such BSR is called as regular BSR.

For the padding BSR, if the amount of padding is greater than or equal to the length of a short buffer status report (short BSR) plus its sub-header but less than the length of a long buffer status report (long BSR) plus its sub-header, and there is data to be sent in a plurality of logical channel Groups (LCGs), then only data in the LCG in which the logic channel with the highest priority is located, i.e., truncated BSR, can be sent. For the regular BSR and the periodic BSR, if there is data to be sent in only one LCG, then the short BSR is sent; if there is data to be sent in more than one LCGs, then the long BSR is sent. The format of the short BSR/truncated BSR is shown in FIG. 4, and the format of the long BSR is shown in FIG. 5.

The LTE has a total of four LCGs. SPS services may be divided into the same LCG or different LCGs, that is, the SPS services may coexist with dynamic services in the same LCG. For the UE where the SPS services coexists with the dynamic schedule services, there are two problems when the BSR is reported according to the existing technology:
The first problem is that the priority of the SPS services is higher than that of the dynamic schedule services. If the SPS services are divided into the same LCG, for the UE where the SPS services coexists with the dynamic schedule services, when the truncated BSR is reported, only the BSR of the LCG in which the SPS services reside is reported. Once the semi-persistent schedule is activated, the eNB uses persistent resources allocated to the UE to transmit SPS data and will not schedule the UE any longer. Thus there is the problem that data in the dynamic schedule services is required to be sent, but the UE cannot be scheduled.

The second problem is that if the SPS services are divided into different LCGs, for the UE where the SPS services coexists with the dynamic schedule services, a BSR of both the SPS services and the dynamic schedule services is reported. The eNB performs the dynamic schedule based on the received BSR to allocate resources to the UE. In fact, the eNB does not need to allocate resources to the SPS services, resulting in waste of air interface resources.

The features of the preamble of the independent claims are known from the document RESEARCH IN MOTION LIMITED: "Various issues regarding SR channel handling (VoIP, SRS, etc)" , 3GPP DRAFT; R2-081870, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Shenzhen China; XP050139560.

### Content of the Invention

The present invention sets out to solve the above-mentioned technical problems.

It provides a method according to claim 1.

Before the UE sends the buffer status report of the dynamic schedule service data to the eNB, the method further comprises: the UE constructing the buffer status report of the dynamic schedule service data only.

Before the UE sends the buffer status report containing both the semi-persistent schedule data and the dynamic schedule service data to the eNB, the method further comprises: the UE constructing the buffer status report containing both the semi-persistent schedule data and the dynamic schedule service data, the buffer status report of the dynamic scheduling service data is a short buffer status report, long buffer status report, or truncated buffer status report; and the buffer status report containing both the semi-persistent schedule service data and the dynamic schedule service data is a long buffer status report, or short buffer status report, or truncated buffer status report.

The method further comprises: dividing the semi-persistent schedule services into the same logical channel group or different logical channel groups.

The present invention further provides a system according to claim 6.

The system further comprises: a first construction module configured to construct only the buffer status report of the dynamic schedule service data before the first sending module sends the buffer status report of the dynamic schedule service data to the eNB.

The system further comprises: a second construction module configured to construct the buffer status report containing both the semi-persistent schedule service data and the dynamic schedule service data before the second sending module sends the buffer status report of the semi-persistent schedule service data and the dynamic schedule service data to the eNB.

The buffer status report constructed by the first construction module is a short buffer status report, or long buffer status report, or truncated buffer status report.

The buffer status report constructed by the second construction module is a long buffer status report, or short buffer status report, or truncated buffer status report.

Compared with the existing technology, the method and system in accordance with the present invention solves two problems that a UE where SPS services coexists with dynamic schedule services cannot be scheduled in the case that data in the dynamic schedule services is required to be sent and that an eNB allocating repetitively dynamic resources to the SPS services causes waste of air interface resources. Since the eNB does not repetitively allocate the dynamic resources to the SPS services, the air interface resources are saved.

### Brief Description of Drawings

FIG. 1 is a schematic diagram of a LTE system;
FIG. 2 is a schematic diagram of semi-persistent schedule;
FIG. 3 is a schematic diagram of uplink dynamic schedule;
FIG. 4 is a schematic diagram of the format of a short BSR and truncated BSR;
FIG. 5 is a schematic diagram of the format of a long BSR;
FIG. 6 is a flow chart of a method for a UE to send a buffer status report in accordance with the present invention;
FIG. 7A-7B are schematic diagrams illustrating sending of a BSR when SPS services are divided into the same LCG and SPS has been activated in accordance with the first application embodiment of the present invention;
FIG. 8A-8B are schematic diagrams illustrating sending of a BSR when SPS services are divided into the same LCG and SPS is not activated in accordance with the second application embodiment of the present invention;
FIG. 9A-9B are schematic diagrams illustrating sending of a BSR when SPS services are divided into different LCGs and SPS has been activated in accordance with the third application embodiment of the present invention;
FIG. 10A-10B are schematic diagrams illustrating sending of a BSR when SPS services are divided into different LCGs and SPS is not activated in accordance with the fourth application embodiment of the present invention; and
FIG. 11 is a block diagram of a system in a UE for sending a buffer status report in accordance with the present.

### Preferred Embodiments of the Present Invention

The main idea of the present invention is to construct a BSR by a UE based on whether SPS is activated so as to avoid the problems that the UE where SPS services coexists with dynamic schedule services cannot be scheduled in the case that data in the dynamic schedule services is required to be sent and that an eNB allocating repetitively dynamic resources to the SPS services causes waste of air interface resources. These two problems are caused because whether the SPS is activated is not distinguished in the existing technology.

A method for sending a buffer status report in accordance with the present invention mainly comprises three steps: a UE determining whether to trigger reporting of the BSR, the UE constructing the BSR based on whether SPS is activated, and the UE sending the BSR to an eNB.

The technical scheme of the present invention will be described in detail below in conjunction with the accompanying drawings and preferred embodiments.

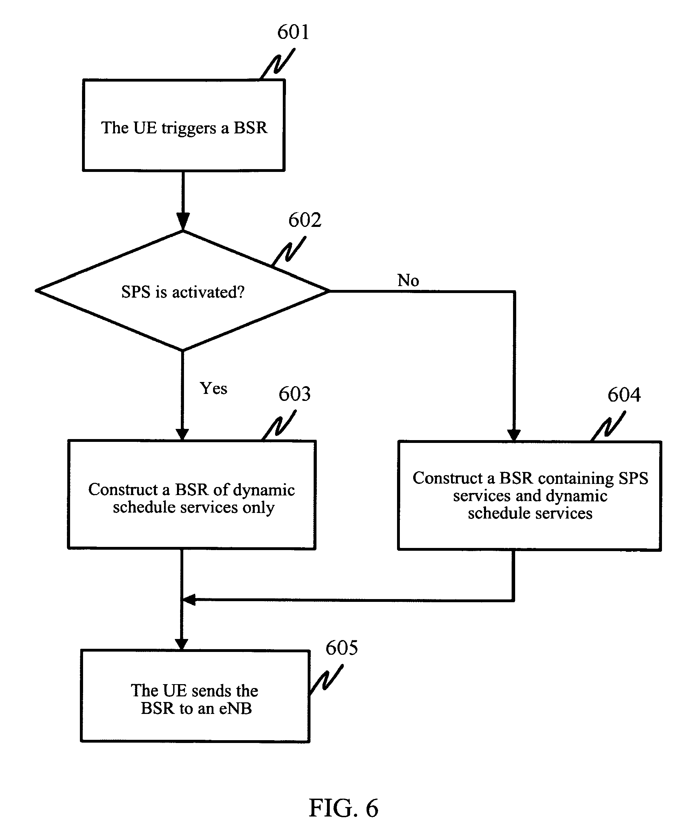

Referring to FIG. 6, a flow chart of a method for a UE to send a buffer status report in accordance with the present invention is shown. The process for the UE to send the BSR is as follows:
Step 601, the UE determines whether a condition of triggering the BSR is satisfied, and if the condition of triggering the BSR is satisfied, step 602 is performed.
Step 602, the UE determines whether the SPS is activated, and if it is activated, step 603 is performed; if it is not activated, step 604 is performed.
Step 603, the UE constructs a BSR of dynamic schedule services only, and step 605 is performed.
Step 604, the UE constructs a BSR containing both SPS services and dynamic schedule services, and step 605 is performed.
Step 605, the UE sends the BSR to an eNB.

There are two division ways for LGGs: the SPS services being specifically divided into the same LCG and the SPS services being divided into different LCGs. Based on the LCG division ways and whether the SPS is activated, there are different application examples.

The technical scheme of the present invention will be described illustratively in conjunction with examples in specific applications.

In the first application example, the BSR is sent when the SPS services are divided into the same LCG and the SPS has been activated.

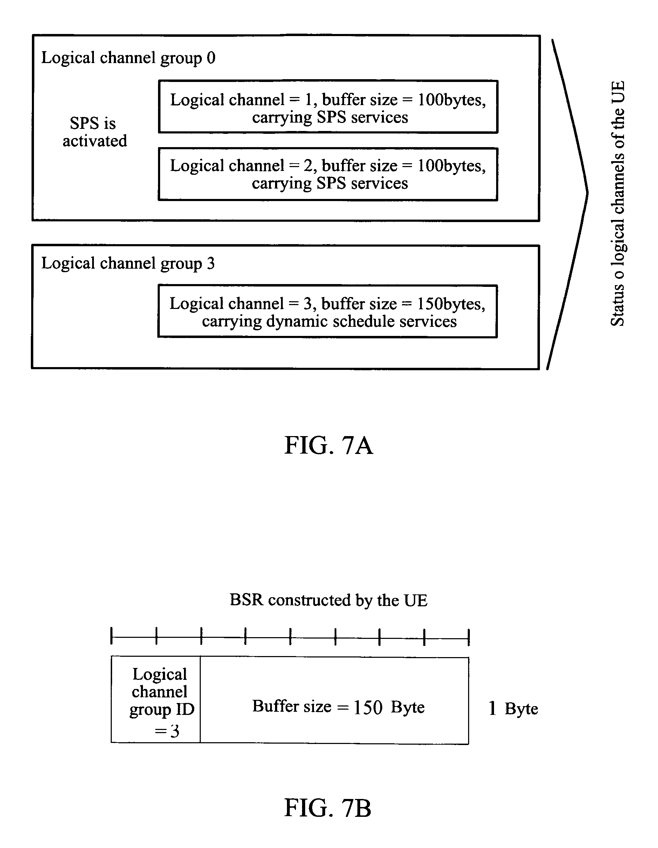

The sending of the BSR when the SPS services are divided into the same LCG and the SPS has been activated is illustrated in FIG. 7A-7B. The UE has three logical channels in total: logical channel 1, logical channel 2, and logical channel 3. Logical channel 1 and logical channel 2 carry the SPS services and are divided into the same logical channel group 0; logical channel 3 carries the dynamic schedule services and is divided into logical channel group 3. The SPS has been activated, and there is data to be sent on each logical channel. Buffer size in logical channel 1 is 100 bytes, buffer size in logical channel 2 is 100 bytes, and buffer size in logical channel 3 is 150 bytes. The process for the UE to send the BSR is as follows:
Step 701, the UE satisfies a condition of triggering the BSR.
Step 702, the UE determines that the SPS has been activated.
Step 703, the UE constructs a BSR of dynamic schedule services only, that is, the BSR of logical channel 3. The UE constructs a short BSR: the logical channel group ID = 3, and the buffer size is 150 bytes.
Step 704, the UE sends the BSR to an eNB.

In the second application example, the BSR is sent when the SPS services are divided into the same LCG and the SPS is not activated.

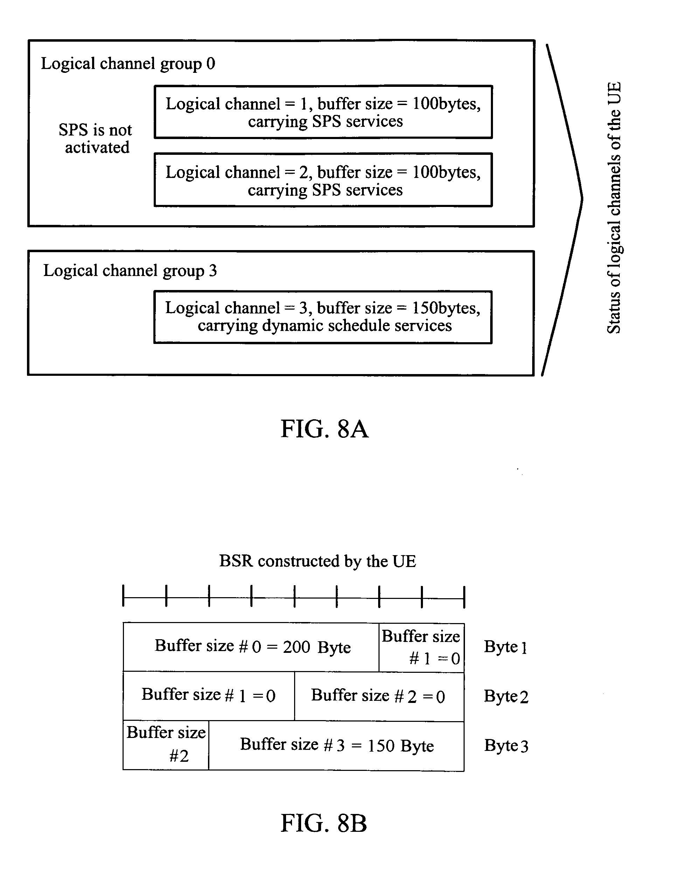

The sending of the BSR when the SPS services are divided into the same LCG and the SPS is not activated is illustrated in FIG. 8A-8B. Logical channel numbers of the UE, the buffer status of each logical channel and the division of the logic channel groups are the same as those in the first application example, and the difference is that the SPS is not activated. The process for the UE to send the BSR is as follows:
Step 801, the UE satisfies a condition of triggering the BSR.
Step 802, the UE determines that the SPS is not activated.
Step 803, the UE constructs a BSR containing both the SPS services and dynamic schedule services, that is, the BSR of logical channel 1, logical channel 2 and logical channel 3. The UE constructs a long BSR: buffer size #0 is 200 bytes and buffer size #3 is 150 bytes.
Step 804, the UE sends the BSR to an eNB.

In the third application example, the BSR is sent when the SPS services are divided into different LCGs and the SPS has been activated.

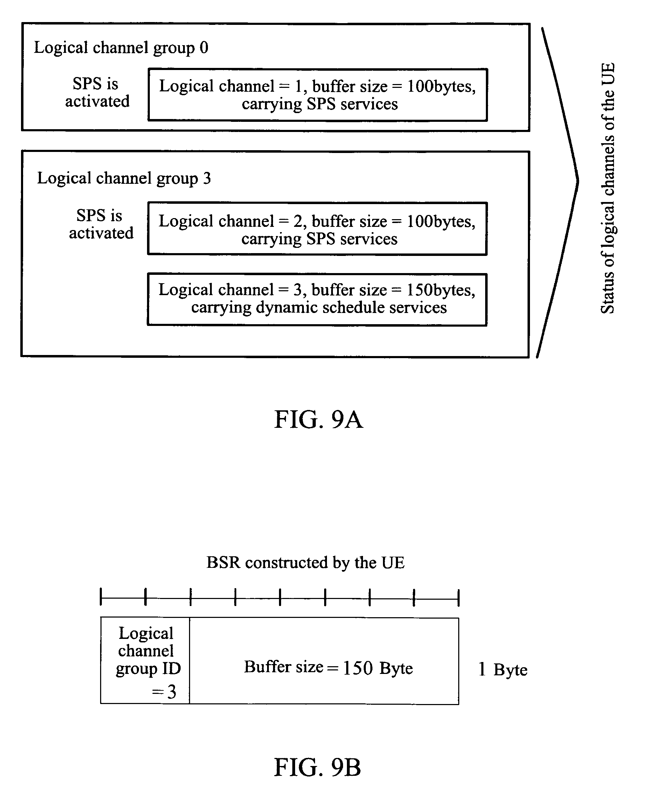

The sending of the BSR when the SPS services are divided into different LCGs and the SPS is activated is illustrated in FIG. 9A-9B. The UE has three logical channels in total, logical channel 1, logical channel 2, and logical channel 3. Logical channel 1 carries the SPS services and is divided into logical channel group 0; logical channel 2 carries the SPS services and is divided into logical channel group 3; logical channel 3 carries the dynamic schedule services and is divided into logical channel group 3. The SPS has been activated, and there is data to be sent on each logical channel. Buffer size in logical channel 1 is 100 bytes, buffer size in logical channel 2 is 100 bytes, and buffer size in logical channel 3 is 150 bytes. The process for the UE to send the BSR is as follows:
Step 901, the UE satisfies a condition of triggering the BSR.
Step 902, the UE determines that the SPS has been activated.
Step 903, the UE constructs the BSR of the dynamic schedule services only, that is, the BSR of logical channel 3. The UE constructs a short BSR: the logical channel group ID = 3, and the buffer size is 150 bytes.
Step 904, the UE sends the BSR to an eNB.

In the fourth application example, the BSR is sent when the SPS services are divided into different LCGs and the SPS is not activated.

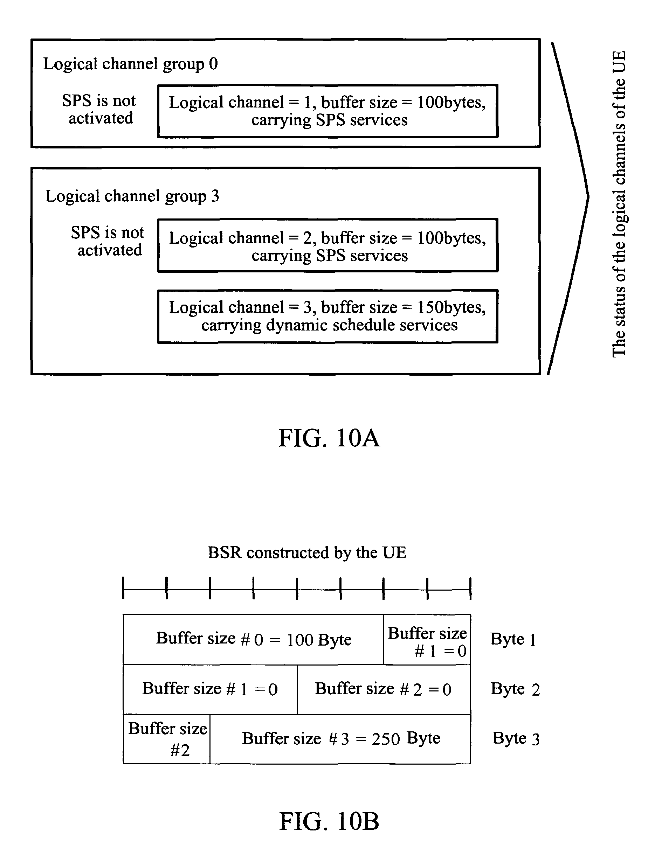

The sending of the BSR when the SPS services are divided into different LCGs and the SPS is not activated is illustrated in FIG. 10A-10B. Logical channel numbers of the UE, the buffer status of each logical channel and the division of the logic channel groups are the same as those in the third application example, and the difference is that the SPS is not activated. The process for the UE to send the BSR is as follows:
Step 1001, the UE satisfies a condition of triggering the BSR.
Step 1002, the UE determines that the SPS is not activated.
Step 1003, the UE constructs the BSR containing both the SPS services and the dynamic schedule services, that is, the BSR of logical channel 1, logical channel 2 and logical channel 3. The UE constructs a long BSR: buffer size #0 is 100 bytes and buffer size #3 is 250 bytes.
Step 1004, the UE sends the BSR to an eNB.

It should be noted that, in each application example, the BSR constructed by the UE may be a long BSR or a short BSR. Whether it is a long BSR or a short BSR does not depend on the BSR sending the SPS services, but on how many LCGs on which there is data to be reported there are. If there is data to be reported on more than one LCG, the UE constructs a long BSR; otherwise, the UE constructs a short BSR.

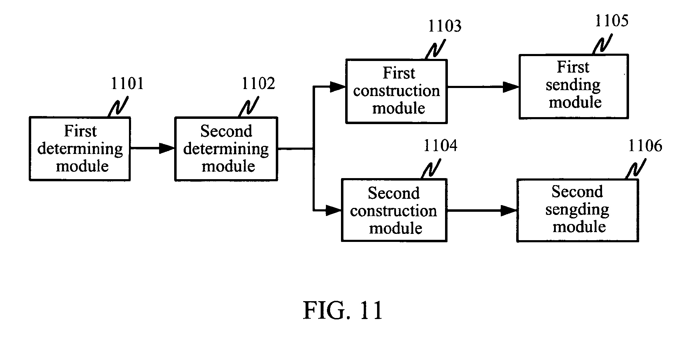

Referring to FIG. 11, a block diagram of a system in a UE for sending a status report buffer in accordance with the present invention is shown. The system comprises: a first determining module 1101 configured to determine whether the UE satisfies a condition of triggering a buffer status report; a second determining module 1102 configured to further determine whether the semi-persistent schedule Is activated when the UE satisfies the condition of triggering the buffer status report, if the semi-persistent schedule is activated, send a first trigger signal; if the semi-persistent schedule is not activated, send a second trigger signal; a first sending module 1105 configured to receive the first trigger signal, and send only the buffer status report of dynamic schedule service data to an evolved NodeB (eNB) based on the first trigger signal; and a second sending module 1106 configured to receive the second trigger signal, and send the buffer status report containing both the semi-persistent schedule data and the dynamic schedule service data to the eNB based on the second trigger signal.

As a preferred embodiment of the present invention, the system further comprises: a first construction module 1103 located between the second determining module 1102 and the first sending module 1105 and configured to construct only the buffer status report of the dynamic schedule service data before the first sending module sends the buffer status report of the dynamic schedule service data to the eNB; and a second construction module 1104 located between the second determining module 1102 and the second sending module 1106 and configured to construct the buffer status report containing both the semi-persistent schedule service data and the dynamic schedule service data before the second sending module sends the buffer status report of the semi-persistent schedule service data and the dynamic schedule service data to the eNB.

The first construction module 1103 constructs a short buffer status report or a long buffer status report.

The second construction module 1104 constructs a long buffer status report or a short buffer status report.

The main technical features of the present invention will be described below.
(1) The granularity of a UE constructing a BSR may be accurate to services, especially be suitable for SPS services. If there are both the SPS services and dynamic schedule services in a LLG group, and the SPS services have been activated, the UE reports only the amount of data of the dynamic schedule services and will not reports the amount of data of the SPS services any longer.
(2) Compared with the existing technology, the format of the BSR does not need to be modified and additional instruction information is not required to be added either.

Of course, the present invention may have other different examples, and various corresponding modifications and variations to the present invention may be made by those skilled in the field without departing from the scope of the present invention. However, such modifications and variations should be covered in the protection scope of the appended claims of the present invention.

## Claims

1. A method for sending a buffer status report, BSR, in a long term evolution, LTE, system, which is applied to a user equipment, UE, supporting semi-persistent schedule, **characterized in that** the method comprises:
determining (601) whether a condition of triggering the BSR is satisfied; and
when the condition of triggering the BSR is satisfied, determining (602) whether the semi-persistent schedule is activated, if the semi-persistent schedule is activated, sending a first trigger signal; if the semi-persistent schedule is not activated, sending a second trigger signal;
the UE sending (605) a BSR containing only dynamic schedule service data to an evolved NodeB, eNB, based on the first trigger signal when the semi-persistent schedule is activated; sending (605) a BSR containing both semi-persistent schedule service data and dynamic schedule service data to the eNB based on the second trigger signal when the semi-persistent schedule is not activated, to report the total amount of data in an uplink buffer of the UE.

2. The method according to claim 1, wherein before the UE sends (605) the BSR of the dynamic schedule service data to the eNB, the method further comprises:
the UE constructing (603) the BSR of the dynamic schedule service data only.

3. The method according to claim 1, wherein before the UE sends (605) the BSR containing both the semi-persistent schedule data and the dynamic schedule service data to the eNB, the method further comprises:
the UE constructing (604) the BSR containing both the semi-persistent schedule data and the dynamic schedule service data.

4. The method according to claim 2 or 3, wherein
the BSR of the dynamic scheduling service data is a short BSR, long BSR,
or truncated BSR; and
the BSR containing both the semi-persistent schedule service data and the dynamic schedule service data is a long BSR, or short BSR, or truncated BSR.

5. The method according to claim 1, further comprising:
dividing the semi-persistent schedule services into the same logical channel group or different logical channel groups.

6. A system for sending a buffer status report, BSR, in a long term evolution, LTE, system, which is configured in a user equipment, UE, supporting semi-persistent schedule, **characterized in that** the system comprises:
a first determining module (1101) configured to determine whether the UE satisfies a condition of triggering the BSR;
a second determining module (1102) configured to further determine whether the semi-persistent schedule is activated when the UE satisfies the condition of triggering the BSR, if the semi-persistent schedule is activated, send a first trigger signal; if the semi-persistent schedule is not activated, send a second trigger signal;
a first sending module (1105) configured to receive the first trigger signal, and send only the BSR of dynamic schedule service data to an evolved NodeB, eNB, based on the first trigger signal when the semi-persistent schedule is activated; and
a second sending module (1106) configured to receive the second trigger signal, and send the BSR containing both semi-persistent schedule data and dynamic schedule service data to the eNB based on the second trigger signal when the semi-persistent schedule is not activated, to report the total amount of data in an uplink buffer of the UE.

7. The system according to claim 6, further comprising:
a first construction module (1103) configured to construct only the BSR of the dynamic schedule service data before the first sending module sends the BSR of the dynamic schedule service data to the eNB.

8. The system according to claim 6, further comprising:
a second construction module (1104) configured to construct the BSR containing both the semi-persistent schedule service data and the dynamic schedule service data before the second sending module sends the BSR of the semi-persistent schedule service data and the dynamic schedule service data to the eNB.

9. The system according to claim 7, wherein the BSR constructed by the first construction module (1103) is a short BSR, or long BSR, or truncated BSR.

10. The system according to claim 8, wherein the BSR constructed by the second construction module (1104) is a long BSR, or short BSR, or truncated BSR.

## Patentansprüche

1. Verfahren zum Senden eines Pufferstatusberichts BSR in einem LTE-System (Long Term Evolution), das bei einem Endgerät UE eingesetzt wird, welches einen semi-persistenten Ablaufsteuerungs-Plan unterstützt, **dadurch gekennzeichnet, dass** das Verfahren folgende Schritte umfasst:
Ermitteln (601), ob eine Bedingung zur Auslösung des BSR-Berichts erfüllt ist; und
wenn die Bedingung zur Auslösung des BSR-Berichts erfüllt ist, Ermitteln (602), ob der semi-persistente Ablaufsteuerungs-Plan aktiviert ist, und falls der semi-persistente Ablaufsteuerungs-Plan aktiviert ist, Aussenden eines ersten Auslösesignals, aber falls der semi-persistente Ablaufsteuerungs-Plan nicht aktiviert ist, Aussenden eines zweiten Auslösesignals;
wobei das UE-Endgerät einen BSR-Bericht aussendet (605), der nur dynamische Plan-Servicedaten an einen entwickelten Knoden B eNB enthält und auf dem ersten Auslösesignal aufbaut, wenn der semi-persistente Ablaufsteuerungs-Plan aktiviert ist, und einen BSR-Bericht aussendet (605), der sowohl semi-persistente Plan-Servicedaten als auch dynamische Plan-Servicedaten an den eNB-Knoten auf der Grundlage des zweiten Auslösesignals enthält, wenn der semi-persistente Ablaufsteuerungs-Plan nicht aktiviert ist, um so die Gesamtmenge der Daten in einem Datenübermittlungspuffer des UE-Endgeräts zu melden.

2. Verfahren nach Anspruch 1, bei welchem vor dem Aussenden (605) des BSR-Berichts zu den dynamischen Plan-Servicedaten an den eNB-Knoten durch das UE-Endgerät das Verfahren des Weiteren den folgenden Schritt umfasst:
das UE-Endgerät baut (603) nur den BSR-Bericht zu den dynamischen Plan-Servicedaten auf.

3. Verfahren nach Anspruch 1, bei welchem vor dem Aussenden des BSR-Berichts, der sowohl die semi-persistenten Plan-Daten als auch die dynamischen Plan-Servicedaten enthält, durch das UE-Endgerät an den eNB-Knoten das Verfahren des Weiteren den folgenden Schritt umfasst:
das UE-Endgerät baut (604) den BSR-Bericht auf, der sowohl die semi-persistenten Plan-Daten als auch die dynamischen Plan-Servicedaten enthält.

4. Verfahren nach Anspruch 2 oder 3, bei welchem
der BSR-Bericht zu den dynamischen Service-Daten zur Ablaufsteuerung ein kurzer BSR-Bericht, ein langer BSR-Bericht oder ein gekürzter BSR-Bericht ist.

5. Verfahren nach Anspruch 1, welches des Weiteren folgendes umfasst:
Aufteilen der semi-persistenten Plan-Servicedaten in die gleiche logische Kanalgruppe oder in unterschiedliche logische Kanalgruppen.

6. System zum Senden eines Pufferstatusberichts BSR in einem LTE-System (Long Term Evolution), das in einem Endgerät UE konfiguriert ist, welches einen semi-persistenten Ablaufsteuerungs-Plan unterstützt, **dadurch gekennzeichnet, dass** das System Folgendes umfasst:
ein erstes Bestimmungsmodul (1101), das so ausgelegt ist, dass es ermittelt, ob das UE-Endgerät eine Bedingung zur Auslösung des BSR-Berichts erfüllt;
ein zweites Bestimmungsmodul (1102), das so ausgelegt ist, dass es außerdem ermittelt, ob der semi-persistente Ablaufsteuerungs-Plan aktiviert ist, wenn das UE-Endgerät die Bedingung zur Auslösung des BSR-Berichts erfüllt, und falls der semi-persistente Ablaufsteuerungs-Plan aktiviert ist, ein erstes Auslösesignal aussendet, aber falls der semi-persistente Ablaufsteuerungs-Plan nicht aktiviert ist, ein zweites Auslösesignal aussendet;
ein erstes Sendemodul (1105), das so ausgelegt ist, dass es das erste Auslösesignal empfängt und nur den BSR-Bericht zu dynamischen Plan-Servicedaten an einen entwickelten Knoten B eNB sendet, der auf dem ersten Auslösesignal aufbaut, wenn der semi-persistente Ablaufsteuerungs-Plan aktiviert ist, und
ein zweites Sendemodul (1106), das so ausgelegt ist, dass es das zweite Auslösesignal empfängt und den BSR-Bericht, der sowohl semi-persistente Plan-Servicedaten als auch dynamische Plan-Servicedaten enthält, auf der Grundlage des zweiten Auslösesignals an den eNB-Knoten aussendet , wenn der semi-persistente Ablaufsteuerungs-Plan nicht aktiviert ist, um so die Gesamtmenge der Daten in einem Datenübermittlungspuffer des UE-Endgeräts zu melden.

7. System nach Anspruch 6, welches des Weiteren folgendes aufweist:
ein erstes Aufbaumodul (1103), das so ausgelegt ist, dass es nur den BSR-Bericht zu den dynamischen Plan-Servicedaten aufbaut, ehe das erste Sendemodul den BSR-Bericht zu den dynamischen Plan-Servicedaten an den eNB-Knoten sendet.

8. System nach Anspruch 6, welches des Weiteren Folgendes aufweist:
ein zweites Aufbaumodul (1104), das so ausgelegt ist, dass es den BSR-Bericht aufbaut, welcher sowohl semi-persistente Plan-Servicedaten als auch dynamische Plan-Servicedaten enthält, ehe das zweite Sendemodul den BSR-Bericht zu den semi-persistenten Plan-Servicedaten als auch dynamische Plan-Servicedaten an den eNB-Knoten sendet.

9. System nach Anspruch 7, bei welchem der von dem ersten Aufbaumodul (1103) aufgebaute BSR-Bericht ein langer BSR-Bericht oder ein kurzer BSR-Bericht oder ein gekürzter BSR-Bericht ist.

10. System nach Anspruch 8, bei welchem der von dem zweiten Aufbaumodul (1104) aufgebaute BSR-Bericht ein langer BSR-Bericht oder ein kurzer BSR-Bericht oder ein gekürzter BSR-Bericht ist.

## Revendications

1. Procédé d'envoi d'un rapport d'état de mémoire tampon, BSR, dans un système d'évolution à long terme, LTE, lequel est appliqué à un équipement d'utilisateur, UE, prenant en charge une planification semi-persistante, **caractérisé en ce que** le procédé comprend les étapes ci-dessous consistant à:
déterminer (601) si une condition de déclenchement du rapport BSR est satisfaite; et
lorsque la condition de déclenchement du rapport BSR est satisfaite, déterminer (602) si la planification semi-persistante est activée, et si la planification semi-persistante est activée, envoyer un premier signal de déclenchement; si la planification semi-persistante n'est pas activée, envoyer un second signal de déclenchement;
dans lequel l'équipement UE envoie (605) un rapport BSR ne contenant que des données de services de planification dynamique à une station «NodeB» évoluée, eNB, sur la base du premier signal de déclenchement lorsque la planification semi-persistante est activée; et il envoie (605) un rapport BSR contenant à la fois des données de services de planification semi-persistante et des données de services de planification dynamique à la station eNB, sur la base du second signal de déclenchement, lorsque la planification semi-persistante n'est pas activée, en vue de signaler la quantité totale de données dans une mémoire tampon de liaison montante de l'équipement UE.

2. Procédé selon la revendication 1, dans lequel, avant que l'équipement UE n'envoie (605) le rapport BSR des données de services de planification dynamique à la station eNB, le procédé comprend en outre l'étape ci-dessous dans laquelle:
l'équipement UE construit (603) le rapport BSR des données de services de planification dynamique uniquement.

3. Procédé selon la revendication 1, dans lequel, avant que l'équipement UE n'envoie (605) le rapport BSR contenant à la fois les données de services de planification semi-persistante et les données de services de planification dynamique, à la station eNB, le procédé comprend en outre l'étape ci-dessous dans laquelle:
l'équipement UE construit (604) le rapport BSR contenant à la fois les données de services de planification semi-persistante et les données de services de planification dynamique.

4. Procédé selon la revendication 2 ou 3, dans lequel le rapport BSR des données de services de planification dynamique correspond à un rapport BSR court, à un rapport BSR long, ou à un rapport BSR tronqué; et
le rapport BSR contenant à la fois les données de services de planification semi-persistante et les données de services de planification dynamique correspond à un rapport BSR long, ou à un rapport BSR court, ou à un rapport BSR tronqué.

5. Procédé selon la revendication 1, comprenant en outre l'étape ci-dessous consistant à:
diviser les services de planification semi-persistante en le même groupe de canaux logiques ou en des groupes de canaux logiques distincts.

6. Système destiné à envoyer un rapport d'état de mémoire tampon, BSR, dans un système d'évolution à long terme, LTE, lequel est configuré dans un équipement d'utilisateur, UE, prenant en charge une planification semi-persistante, **caractérisé en ce que** le système comprend:
un premier module de détermination (1101) configuré de manière à déterminer si l'équipement UE satisfait une condition de déclenchement du rapport BSR;
un second module de détermination (1102) configuré de manière à déterminer en outre si la planification semi-persistante est activée lorsque l'équipement UE satisfait la condition de déclenchement du rapport BSR, et si la planification semi-persistante est activée, à envoyer un premier signal de déclenchement; et si la planification semi-persistante n'est pas activée, à envoyer un second signal de déclenchement;
un premier module d'envoi (1105) configuré de manière à recevoir le premier signal de déclenchement, et à envoyer uniquement le rapport BSR de données de services de planification dynamique à une station « NodeB » évoluée, eNB, sur la base du premier signal de déclenchement lorsque la planification semi-persistante est activée; et un second module d'envoi (1106) configuré de manière à recevoir le second signal de déclenchement, et à envoyer le rapport BSR contenant à la fois des données de services de planification semi-persistante et des données de services de planification dynamique à la station eNB, sur la base du second signal de déclenchement, lorsque la planification semi-persistante n'est pas activée, en vue de signaler la quantité totale de données dans une mémoire tampon de liaison montante de l'équipement UE.

7. Système selon la revendication 6, comprenant en outre:
un premier module de construction (1103) configuré de manière à ne construire que le rapport BSR des données de services de planification dynamique avant que le premier module d'envoi n'envoie le rapport BSR des données de services de planification dynamique à la station eNB.

8. Système selon la revendication 6, comprenant en outre:
un second module de construction (1104) configuré de manière à construire le rapport BSR contenant à la fois les données de services de planification semi-persistante et les données de services de planification dynamique avant que le second module d'envoi n'envoie le rapport BSR des données de services de planification semi-persistante et des données de services de planification dynamique à la station eNB.

9. Système selon la revendication 7, dans lequel le rapport BSR construit par le premier module de construction (1103) correspond à un rapport BSR court, ou à un rapport BSR long, ou à un rapport BSR tronqué.

10. Système selon la revendication 8, dans lequel le rapport BSR construit par le second module de construction (1104) correspond à un rapport BSR long, ou à un rapport BSR court, ou à un rapport BSR tronqué.
